# EUROPEAN PATENT APPLICATION

(11) **EP 3 822 501 A1**
(43) Date of publication of application: **19.05.2021**
(21) Application number: 20206865.6
(22) Date of filing: 11.11.2020
(51) Int. Cl.: F16C 19/06, F16C 19/52, F16C 33/58, F16C 41/04

(54) **ELECTROLYTIC ANTI-CORROSION BEARING**

(30) Priority: 13.11.2019 JP 2019205400
(71) Applicant: Nachi-Fujikoshi Corp., Tokyo 105-0021 (JP)
(72) Inventor: IJIMA, Keiichi, Toyama-shi, Toyama 930-8511 (JP)
(74) Representative: Horn Kleimann Waitzhofer Patentanwälte PartG mbB

(57) **Abstract**

An object is to provide an anti-electrolytic corrosion bearing that has a high dimensional accuracy of an outer cylindrical surface, and in which an axial shift due to a load is unlikely to occur and electrolytic corrosion can be favorably prevented.

[Means to Solve the Problem] A configuration of an anti-electrolytic corrosion bearing (bearing 100) according to the present invention lies in that an insulating coating 110 is applied to an outer cylindrical surface 104a of an outer ring 104, and an insulating washer 120 having a ring shape that covers an end surface 104b of the outer ring 104 is provided.

## Description

### [Field of the Invention]

The present invention relates to an anti-electrolytic corrosion bearing.

### [Background of the Invention]

In recent years, with the progress in development of EV vehicles (electric cars), HV vehicles (hybrid cars), and the like, the number of high-voltage components mounted in a single automobile has been increasing. If a current of these high-voltage components flows through a bearing, electrolytic corrosion may occur on the surface of a rolling element and raceway surfaces of an outer ring and an inner ring of a bearing, and cause damage. For this reason, the inventor of the present application invented the anti-electrolytic corrosion rolling ball bearing in Patent Document 1.

The anti-electrolytic corrosion rolling ball bearing in Patent Document 1 is provided with a cross-sectional step portion or protruding semi-circular or linear chamfered portion on a peripheral edge between a radially inner surface (a shoulder portion next to balls) of an outer ring or a radially outer surface of an inner ring, and an end surface. The step portion or the chamfered portion is coated with an electrical insulator, which extends from a radially outer surface of the outer ring or a radially inner surface of the inner ring, then reaches and goes beyond the end surface, to the step portion or the chamfered portion.

### [Prior Art Documents]

### [Patent Documents]

[Patent Document 1] JP H7-43488U

### [Summary of the Invention]

### [Problems to be Solved by the Invention]

However, if the chamfered portion formed on the radially inner surface of the outer ring is also coated with the electrical insulator as in Patent Document 1, the thickness accuracy deteriorates if insert molding is used. For this reason, finishing needs to be performed after forming an electrical insulator coating by means of insert molding, which leads to higher costs. Moreover, if a coating is formed by means of insert molding, the thickness of the coating becomes large, and thus a problem arises in that the coating is deformed and an axial shift is likely to occur when a load is received. Although an insulating coating can also be made in the form of a thin film, if the coating is applied to the radially inner surface of the outer ring, it is difficult to apply the coating only to the shoulder portion, and the raceway surface is also covered. Therefore, it has been difficult to apply the insulating coating to the radially inner surface.

In view of the foregoing problem, an object of the present invention is to provide an anti-electrolytic corrosion bearing that has a high dimensional accuracy of the outer cylindrical surface, in which an axial shift due to a load is unlikely to occur and electrolytic corrosion can be favorably prevented.

### [Means to Solve the Problems]

To solve the foregoing problem, a representative configuration of the anti-electrolytic corrosion bearing according to the present invention lies in an anti-electrolytic corrosion bearing including: an insulating coating applied to an outer cylindrical surface of an outer ring; and an insulating washer having a ring shape that covers an end surface of the outer ring.

According to the above configuration, the insulating coating is applied only to the outer cylindrical surface of the outer ring. In other words, the insulating coating is not applied to the radially inner surface of the outer ring. Since the insulating coating is thinner than a coating formed by means of insert molding, the dimensional accuracy of the outer cylindrical surface increases, and an axial shift due to deformation can also be prevented. Also, finishing performed in the case of insert molding can be simplified, and cost reduction can be achieved. In addition, due to the end surface of the outer ring being covered by the ring-shaped insulating washer, high insulation performance can be ensured even though the insulating coating is not applied to the radially inner surface. Accordingly, electrolytic corrosion of the bearing can be favorably prevented.

If the insulating washer has a flange that protrudes along a radially inner surface of the outer ring from a wall that covers the end surface of the outer ring, and the insulating washer is fitted to the outer ring, the radially inner surface of the outer ring can be reliably insulated. Accordingly, the aforementioned effect can be enhanced. Furthermore, since the outer ring and the insulating washer are integrated, handling at the time of attachment can be made easier.

It is preferable that a groove in a circumferential direction is formed on a radially inner surface of the outer ring, and a claw that engages with the groove is formed on a flange of the insulating washer. Thus, it can be favorably prevented that the insulating washer is detached (comes off).

### [Effect of the Invention]

According to the present invention, an anti-electrolytic corrosion bearing can be provided that has a high dimensional accuracy of the outer cylindrical surface, and in which an axial shift due to a load is unlikely to occur and electrolytic corrosion can be favorably prevented.

### [Brief Explanation of the Drawings]

FIG. 1 illustrates an anti-electrolytic corrosion bearing of an embodiment.
FIG. 2 is an overall perspective view of the anti-electrolytic corrosion bearing.
FIG. 3 illustrates variations of the bearing.
FIG. 4 illustrates variations of the bearing.

### [Embodiments of the Invention]

Hereinafter, a preferable embodiment of the present invention will be described in detail with reference to the attached drawings. Dimensions, materials, other specific values, and the like described in this embodiment are merely examples for facilitating understanding of the invention, and are not intended to limit the present invention unless stated otherwise. Note that in the present specification and drawings, elements having substantially the same functions and configurations are assigned the same reference numerals to omit redundant descriptions, and elements that do not directly relate to the present invention are omitted in the description or drawings.

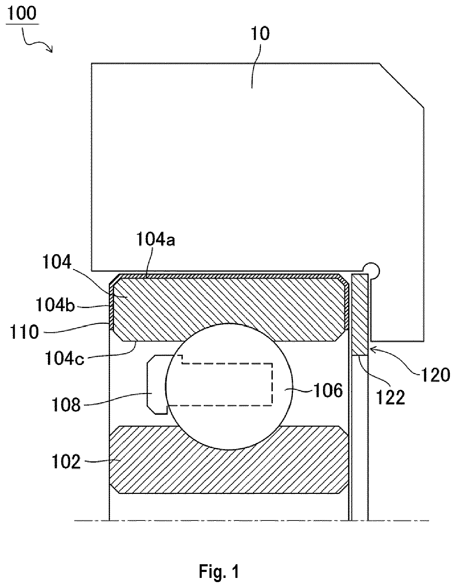

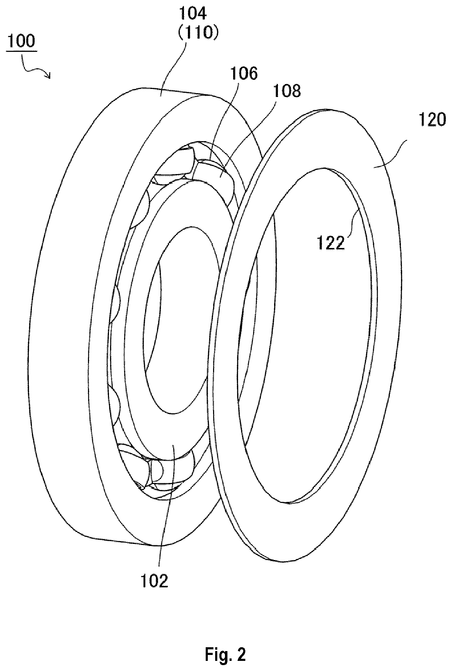

FIG. 1 illustrates an anti-electrolytic corrosion bearing of the present embodiment. FIG. 2 is an overall perspective view of the anti-electrolytic corrosion bearing. As shown in FIG. 1, the anti-electrolytic corrosion bearing (hereinafter referred to as a "bearing 100") of the present embodiment is disposed within a casing 10. As shown in FIGS. 1 and 2, the bearing 100 is a single-row ball bearing with a deep groove that has a single row of balls 106, which serve as rolling elements, and holders 108 between an inner ring 102 and an outer ring 104.

In the bearing 100 of the present embodiment, an insulating coating 110 is applied to an outer cylindrical surface 104a of the outer ring 104, as shown in FIG. 1. Thus, insulation performance of the outer cylindrical surface of the outer ring 104 can be ensured. Particularly, in the bearing 100 of the present embodiment, the insulating coating is applied to an end surface 104b, in addition to the outer cylindrical surface 104a, of the outer ring 104. Thus, insulation performance is also ensured on the end surface 104b. The insulating coating can be formed by heating and melting thermoplastic resin and applying it, or by applying resin dissolved in a solvent and drying it. The average thickness of the insulating coating is about 0.3 mm, and the dimensional accuracy can be improved better than with a coating formed by means of insert molding.

The end surface 104b of the outer ring 104 is covered by the insulating washer 120. As shown in FIG. 2, the insulating washer 120 has a ring shape. As shown in FIG. 1, it is preferable that a radially inner end 122 of the insulating washer 120 is located inward of the radially inner surface 104c of the outer ring 104. Thus, high insulation performance can be achieved.

The insulating coating 110 can be applied since the radially inner surface 104c is not coated and only the outer cylindrical surface 104a and the end surface 104b of the outer ring 104 are coated as in the above-described configuration. This is because, since the radially inner surface 104c is not coated, there is no concern that the raceway surface is covered when a liquid coating material is applied. Furthermore, since the insulating coating 110 is thinner than a coating formed by means of insert molding, the dimensional accuracy of the outer cylindrical surface of the bearing 100 increases, and an axial shift due to deformation can also be prevented. Also, finishing performed in the case of insert molding can be simplified. Accordingly, the cost at the time of manufacturing the bearing 100 can be reduced.

By covering the end surface 104b of the outer ring 104 with the ring-shaped insulating washer 120, a portion between the radially inner surface 104c and the casing 10 can be reliably insulated even though the insulating coating is not applied to the radially inner surface 104c. Accordingly, it is possible to ensure high insulation performance and favorably prevent electrolytic corrosion of the bearing 100.

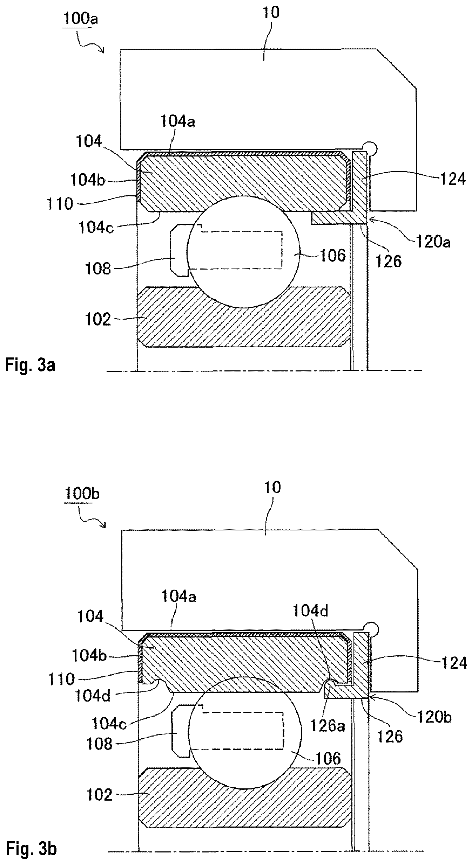

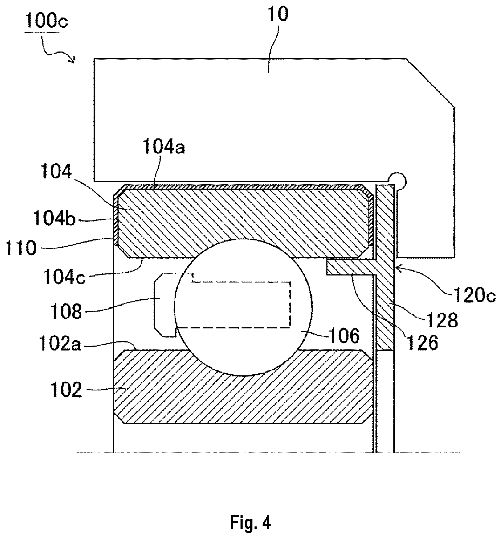

FIGS. 3 and 4 illustrate variations of the bearing. The insulating washer 120 of the bearing 100 shown in FIG. 1 covers only the end surface 104b of the outer ring 104. In contrast, an insulating washer 120a of a bearing 100a as shown in FIG. 3(a) has a flange 126, which protrudes along the radially inner surface 104c of the outer ring 104 from a wall 124 that covers the end surface 104b of the outer ring 104. Thus, a state where the insulating washer 120a is fitted to the outer ring 104 is achieved, and the radially inner surface 104c of the outer ring 104 can be reliably insulated. Furthermore, since the outer ring 104 and the insulating washer 120a are integrated, handling at the time of attachment can be made easier.

In a bearing 100b as shown in FIG. 3(b), a groove 104d in the circumferential direction is formed in the radially inner surface 104c of the outer ring 104. The groove 104d has a configuration similar to a seal groove in a sealed bearing. Meanwhile, a claw 126a, which engages with the groove 104d, is formed on the flange 126 of the insulating washer 120b. Thus, since the claw 126a of the insulating washer 120b engages with the radially inner surface 104c of the outer ring 104, it can be favorably prevented that the insulating washer 120b is detached (comes off) from the outer ring 104.

A wall 128 of an insulating washer 120c of a bearing 100c shown in FIG. 4 covers the end surface 104b of the outer ring 104 and extends to a region near a radially inner surface 102a of the inner ring 102. Thus, a gap between the outer ring 104 and the inner ring 102 can be closed by the wall 128, and the wall 128 can function as a seal. Furthermore, due to the extending flange 126 that protrudes along the radially inner surface 104c of the outer ring 104 from an intermediate position on the wall 128, the outer ring 104 and the insulating washer 120c are integrated, similarly to the bearing 100a shown in FIG. 3(a), and handling at the time of attachment can be made easier.

Although a preferable embodiment of the present invention has been described above with reference to the attached drawings, the present invention is, needless to say, not limited to the above-described example. It is apparent that a person skilled in the art may conceive various modifications and variations within the scope of the appended patent claims, and those modifications and variations should be understood to be naturally encompassed in the technical scope of the present invention.

### [Industrial Applicability]

The present invention can be used as an anti-electrolytic corrosion bearing.

### [Index to the Reference Numerals]

10 ... Casing; 100 ... Bearing; 100a ... Bearing; 100b ... Bearing; 100c ... Bearing; 102 ... Inner ring; 102a ... Radially inner surface; 104 ... Outer ring; 104a ... Outer cylindrical surface; 104b ... End surface; 104c ... Radially inner surface; 104d ... Groove; 106 ... Ball; 108 ... Holder; 110 ... Insulating coating; 120, 120a to 120c ... Insulating washer; 122 ... Radially inner end; 124 ... Wall; 126 ... Flange; 126a ... Claw; 128 ... Wall

## Claims

1. An anti-electrolytic corrosion bearing (100, 100a, 100b, 100c) comprising:
an insulating coating (110) applied to an outer cylindrical surface (104a) of an outer ring (104); and
an insulating washer (120, 120a, 120b, 120c) having a ring shape that covers an end surface (104b) of the outer ring (104).

2. The anti-electrolytic corrosion bearing (100, 100a, 100b, 100c) according to claim 1,
wherein the insulating washer (120, 120a, 120b, 120c) has a flange (126) that protrudes along a radially inner surface (104c) of the outer ring (104) from a wall (124) that covers the end surface (104b) of the outer ring (104), and
the insulating washer (120, 120a, 120b, 120c) is fitted to the outer ring (104).

3. The anti-electrolytic corrosion bearing (100, 100a, 100b, 100c) according to claim 1 or 2,
wherein a groove (104d) in a circumferential direction is formed on a radially inner surface (104c) of the outer ring (104), and
a claw (126a) that engages with the groove (104d) is formed on a flange (126) of the insulating washer (120, 120a, 120b, 120c).
